# EUROPEAN PATENT APPLICATION

(11) **EP 0 799 660 A1**
(43) Date of publication of application: **08.10.1997**
(21) Application number: 97105093.5
(22) Date of filing: 26.03.1997
(51) Int. Cl.: B21D 51/22

(54) **Process for realising grooves in the surface of cookware, such cookware and apparatus for performing the process**

(30) Priority: 03.04.1996 IT MI960651
(71) Applicant: Puppieni S.r.l., 28023 Omegna (Novara) (IT)
(72) Inventor: Puppieni, Claudio, 28023 Omegna (Novara) (IT)
(74) Representative: Lecce, Giovanni

(57) **Abstract**

A process for the realisation of grooves along the surfaces of kitchen containers (12) from metal, comprising at least a stage of permanent deformation with localised pressure exercised according to a continuous or alternated sequence along points of said surfaces that define a spiral-shaped path. The equipment for the actuation of the process comprises a tool (16), (30), (38) rotary on its own axis, having a circular peripheral development, with a smooth, shaped or indented surface, orthogonally oriented towards the external bottom (12') of body (12) and/or the side surface of said body. The external bottom surface (12') is provided with continuous grooves or channels (26), (40) having a spiral-like development due to the pressure exercised by said tools which, besides, compact the material forming said body and the covering obtained on it.

## Description

The present invention relates to a process for realising grooves along surfaces of kitchen containers.

More particularly, the present invention relates to a process to obtain, especially on the external bottom of kitchen pots from aluminium or other suitable material, a surface provided with grooves having a spiral-shaped development which prevents pots from slipping on the burner, electrical plate from pyroceram, forming at the same time a suitable surface finishing for said bottom. The invention also relates to the equipment utilised for the actuation of the process and the related kitchen containers obtained.

As is known, kitchen pots used for food cooking are conventionally obtained from various materials, especially stainless steel, aluminium and its alloys. Alumium pots, according to a widespread type, are lined in the inside with anti-adherence substances such as polytetrafluoroethylene (PTFE) and externally with the same material or enamels or varnishes: the application of the lining, made directly on the metal disc that defines the development of the container to be obtained, facilitates the moulding operation of the body, and forms, in the inside of the same, a layer that prevents food from adhering to the bottom and the wall during cooking. After the die moulding operation, the body obtained must be submitted to further working stages, among which there is comprised the stage that causes the roughening of the bottom external surface. This operation that has the main aim of causing the container to be stable on the cooking top, may be carried out through the removal of part of the material, replacing it with the application of further layers of anti-slipping substances, or by forming, for instance through moulding, concentric portions alternating protrusions and cavities. In the first case, the removal of the covering obtained by a grinding operation through turning gives rise to a bottom sufficiently rough not to slip, but substantially raw, and therefore anaesthetic and that, moreover is easily exposed to the attack of the detergents in case of washing in dish-washing machines: besides, the surface so obtained may easily soil, and even damage, the plates from pyroceram. Lastly the rectification operation takes place with the removal of shavings, causing therefore the well known problems of working wastes and environment pollution.

In the second case the superimposition on the PTFE layer of a further layer of material, such as for instance fluorocarbonate resin, does not modify to a substantial extent the characteristics of the external bottom of the containers with respect to the elimination of the slipping effect; besides, the same tends to deteriorate quickly, as it is always in touch with the heat source.

Also the third solution that provides the formation of portions with alternate concentric indentations and cavities involves complex operations of moulding and/or turning that markedly increase production costs; besides they are not always resolutive for the purposes of the stabilisation of the container on the cooking top or for aesthetic purposes; so, on the bottom of said containers a further layer is often applied that forms a tendentially rough and decorative covering, which further increases product costs.

Besides, in all of the above solutions, no compacting happens of the covering on the metal body and/or the same material forming said body, as would be desirable to increase the resistance of the bottom to reformations.

Object of this invention is to obviate the above drawbacks.

More particularly, object of this invention is to provide a process to obtain on kitchen containers grooved surfaces that can prevent the slipping of the body on the cooking top, suitable to constitute an adequate finishing for the bottom of said containers, causing any further operation to be superfluous, and capable of realising the compacting of the material and the covering, to increase the deformation resistance of said bottom.

A further object of the invention is to provide a process as defined above that does not require complex technologies for its realisation.

The kitchen container obtained based on the process of this invention has characteristics of optimum configuration of the treated surface under the functional profile with respect to the stability on the cooking top and from the aesthetic point of view, and may be advantageously utilised on the cooking tops from pyroceram, without running the risk of damaging the surfaces; besides it is advantageously washable also in the dish-washing machine, as it has no uncovered portions which might deteriorate under the attack of detergents.

The aforementioned objects and still other ones are achieved by the process of the present invention, characterised in that it comprises at least a stage of permanent deformation with localised pressure exercised according to a continuous alternated sequence along the walls of said surfaces that define a substantially spiral-shaped path.

Other characteristics and advantages of the invention will be better understood from the following description, with reference to the attached drawings, supplied by ways of non limitative indication, wherein:
Figure 1 shows shematically a kitchen container placed on a conventional machine tool, such as a lathe, for the actuation of the process subject matter of the invention;
Figure 2 shows a preferred embodiment of the container bottom obtained based on the process of this invention, and by way of example the tool used for the purpose;
Figure 3 shows schematically an alternative embodiment of the container obtained based on the process of this invention, and by way of example the tool used for the purpose;
Figure 4 shows schematically a further variant of the embodiment of the container obtained based on the process of this invention, and by way of example the tool used for the purpose.

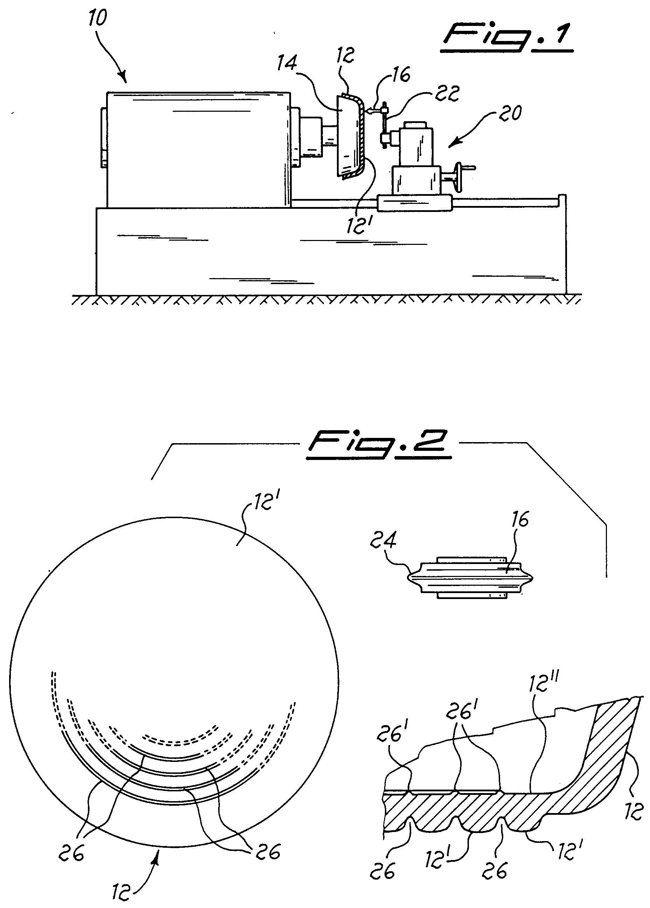

With reference to the aforementioned figures, the process for realising grooves along surfaces of kitchen containers, in particular on the external bottom of pots from PTFE-covered aluminium, basically consists of a mechanical deformation working carried out on a lathe, schematised as a whole by 10 in Figure 1, through which the container body indicated by 12 and supported by a complementary form 14 is submitted to the action of a tool 16; the shaped profile of said tool engraves the external portion 12' of body 12, defining on the same a continuous groove having a spiral-shaped development. Said mechanical working is realised on body 12 already drawn and lined in the inside with one or more layers of anti-adherent material, such as for instance PTFE, and externally covered with the same substance or enamels or varnishes. The support form 14 is obtained from steel or from a sofier material depending on the type of grooves to be obtained, as will be specified later on; the machine-tool 10 is provided with known means for the restraint, the pressure regulation of tool 16 and its handling along the surface 12' of body 12, schematised as a whole by 20, and forming a supporting frame.

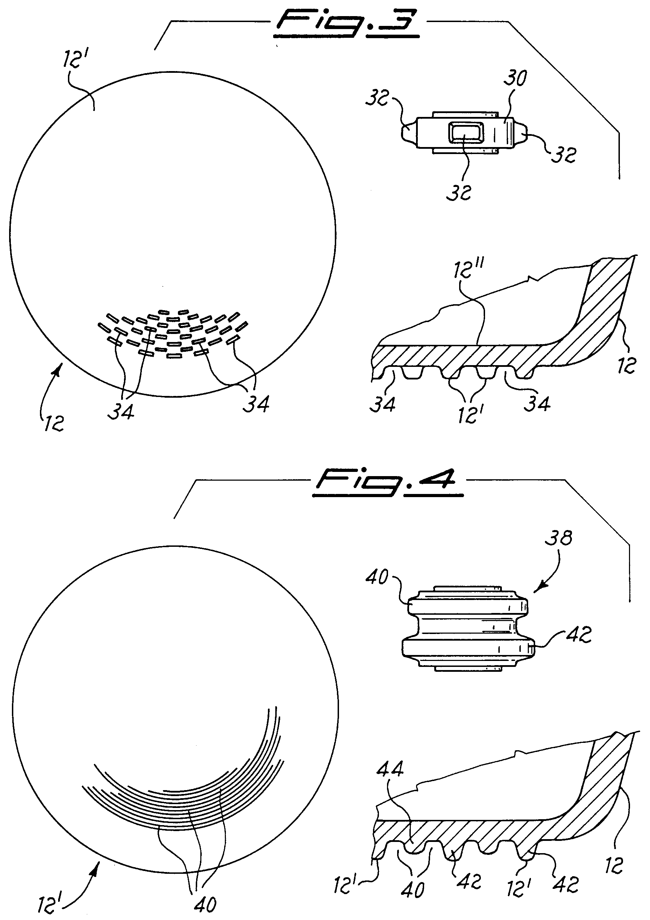

Figure 2 shows a first embodiment of a kitchen container on whose bottom a continuous groove is obtained having a spiral-shaped development, based on the process of the invention. The container body 12, schematically seen from down upwards and in partial detail in cross-section, is obtained from aluminium and its alloys, and shows both in the inside and the outside a covering from anti-adherent material such as PTFE, developed through one or more layers: the thickness of body 12, at least in the part referred to its bottom, is advantageously comprised between 1,5 and 4 mm. Tool 16 is substantially constituted of a shaped metal disc, preferably from steel, provided with a suitable seat for the connection with known means to the tool-holder of machine 10, schematised by 22 in Figure 1 and placed at the end of said means 20, with a substantially orthogonal orientation with respect to bottom 12' of body 12. Said tool 16 has a profile 24 substantially "V"-shaped which defines an angle having a width preferably but not critically comprised between 35 and 45°. The same tool 16 is rotatably connected to the relevant tool-holder. The operating stage that creates the grooves on bottom 12' of container body 12 with an anti-adherent material, connected to the rotary form 14 of a tool-machine comprises at least an intervention on the same bottom of the tool that rotates about its axis the wedge-shaped 24 of said tool 16 engraves its surface, creating on the same a continuous spiral-shaped groove. The pressure of the tool 16 on the bottom 12', caused for instance by the action of a hydraulic piston (not shown) or the like is comprised, by way of example, between 0,8 and 20 bar, depending on the depth of grooves or channels that are to be realised, the surface that gets in touch and the material treated. According to a preferred embodiment, the depth of said grooves is comprised between 0,2 and 1,2 mm and their distance between 0,5 and 6 mm, according to the shifting velocity of tool 16 from the periphery towards the centre of bottom 12' of body 12.

Figure 2 shows in detail said grooves indicated by 26, having a shape complementary to the one of the profile 24 of tool 16 and spaced by rectilinear portions that configure bottom 12'. With reference to the same figure, in the hypothesis of use of a surface shape 14 of body 12 from plastic material, such as for instance PTFE, grooves are mainly obtained on the external bottom 12' and to a lesser extent on the inside indicated by 12 of the same body, creating continuous projections 26' also spiral-shaped.

Figure 3 schematically shows an alternative embodiment obtained according to the process of this invention on a kitchen container 12 with the use of a tool having a different profile, rotary on its own axis. Said tool indicated as a whole by 30 and provided along the peripheral surface with integral projections 32 spaced from one another to create along bottom 12' of body 12 a continuous series of small grooves 34 having a spiral-shaped development. Peripheral projections 32 of tool 30 have, by way of example, a truncated-pyramidal configuration, with a quadrangular upper base and side faces whose inclination is preferably and not critically comprised between 50° and 75°: the action of tool 30, rotary on its axis, determines on bottom 12' of body 12 the creation of a plurality of said grooves 34, near to one another and having a depth comprised, by way of example, between 0,2 and 2 mm, does not cause the creation of corresponding projections on the internal front 12' of body 12.

Figure 14 shows schematically a further variant of the grooves obtained, according to the process of this invention on bottom 12' of a kitchen container 12, with the use of a different tool rotary on its own axis. Said tool, indicated as a whole by 38, is advantageously constituted by a double-profile disc or metal castors that define two coupled peripheral surfaces, preferably smooth, 40, 42, having each a different diameter. The action of the tool 38 applied to the machine 10 realises, on the external bottom 12' of body 12, a continuous series of grooves 40 alternating with projections 42 and 44, having a different extension. From the figure that illustrates the enlarged detail of body 12 submitted to the intervention of tool 38, one notices that the depth of grooves 40 is constant, while projections 44 are less marked with respect to projections 42, whose base corresponds to the original bottom 12'. The compression effect exercised by tool 38 on bottom 12' is actually greater in correspondence of the projections of surface 43 having a diameter greater than the diameter of the same tool.

In all the embodiments defined above the compression exercised by the different tools 16, 30, 38 on bottom 12' of body 12 gives rise to several advantages:
- creation of grooves 26, 40 or cavities 34, developed according to a spiral-shaped path which modify the flat structure of said bottom and prevent body 12 from sliding on the cooking top;
- it markedly compacts the material that constitutes body 12, causing bottom 12' to be more resistant to the deformation that is caused by the overheating during food cooking, as the hardness of the material, for instance aluminium, markedly increases passing from a starting value comprised between 20 and 22 to a final value comprised between 30 and 38;
- it further compacts the layer or layers of anti-adherent covering - both in the inside and the outside - of the metal body, causing the covering to become more wear resistant;
- it creates a surface having a greater development with respect to the original one, due to the formation of the side walls of grooves or cavities with ensuing better heat absorption.

In case of cooking on electric plates (cast iron, ceramic or the like), as the contact surface reduces, being limited to the projecting portions, there is obtained a lesser wear of the bottom as a whole and a greater duration of the lining from PTFE, which is less exposed to boundary temperatures exceeding 300°C.

Tools 16, 30, 30 shown in the attached figures by way of non critical example, may obviously have, as concerns the configuration, a different profile, possibly spherical, to realise grooves or cavities having any geometry whatever; besides, said grooves and cavities may be formed also along the side surface of container bodies to optimise heat preservation in their inside.

Even though the process and equipment of this invention are particularly suitable for the treatment of container bodies from aluminium lined with anti-adherent material, and externally covered also by a further layer applied by silk-screen process, the same processes and equipment may be used on container bodies from raw aluminium, stainless steel or any other suitable material, or on bottoms from aluminium of steel bodies.

The invention, as is described hereabove and claimed in the appended claims, has been proposed only by way of indication, being understood that the same is susceptible of many modifications and variants, all of them falling within the invention scope.

## Claims

1. A process for the realisation of grooves along surfaces of kitchen containers (12) from metal, comprising at least a stage of permanent deformation, with a localised pressure exercised according to a continuous or alternated sequence along points of said surfaces that define a substantially spiral-shaped path.

2. The process according to claim 1, wherein container (12) is obtained by drawing starting from a disc from aluminium internally and externally covered by at least a layer from tetrafluoroethylene and/or fluorocarbonate resin.

3. The process according to the preceding claims, wherein said stage of permanent deformation of container (12) is realised at least along the external bottom of the same.

4. Equipment per the actuation of the process of the preceding claims, comprising at least a tool (16), (30, (38), rotary on its axis, having a circular peripheral development, with a smooth or shaped or indented surface, orthogonally oriented towards the external bottom (12') of body (12) and/or the side surface of said body, said tool being supported by frame (20) of a turning machine (10) or the like, having a form (14) from steel or plastic material having a configuration complementary to the one of body (12).

5. The equipment according to claim 4, characterised in that said tool (16) is constituted by a metal disc having a substantially "V"-shaped profile (24), which defines an angle of a width comprised between 35° and 45°.

6. The equipment according to one or more of the preceding claims, wherein said tool (30) is constituted by a metal disc having a peripheral surface provided with at least an integral projection (32) having a substantially truncated-pyramidal configuration, with an upper quadrangular base and side faces having an inclination comprised between 50 and 75°.

7. The equipment according to one or more of the preceding claims, wherein said tool (38) is constituted by a double profile metal disc that defines two couple peripheral surfaces, smooth or shaped (40 (42) having each a different diameter.

8. A kitchen container (12) from aluminium internally and/or externally covered by at least a layer from polytetrafluoroethylene and/or fluorocarbonate resin or any other suitable material, obtained based on the process and the equipment of the preceding claims, wherein at least the external surface (12') of the bottom has continuous grooves or cavities (26), (40) having a spiral-shaped development that determine, with respect to the starting condition, an increase in the hardness of said surface comprise at least between 70% and 90%.

9. The container according to one or more of the preceding claims, wherein at least the external surface (12') of the bottom has approached cavities (34) oriented according to a spiral-shaped development.

10. The container according to one or more of the preceding claims, wherein the depth of said grooves (26) (40) (34) is comprised between 0,2 and 1,2 mm.

11. The container according to one or more of the preceding claims, wherein the distance between said grooves (26) (40) and cavities (34) is comprised between 0,5 and 5 mm.

12. A process for the realisation of grooves along surfaces of kitchen containers, equipment used and containers obtained likewise, such as are described and illustrated by way of example and for the purposes specified.
